# EUROPEAN PATENT SPECIFICATION

(11) **EP 2 998 211 B1**
(45) Date of publication and mention of the grant of the patent: **20.12.2017**
(21) Application number: 13884845.2
(22) Date of filing: 16.05.2013
(51) Int. Cl.: B62M 6/50, B62M 6/55

(54) **ELECTRICALLY ASSISTED BICYCLE**
ELEKTRISCH UNTERSTÜTZTES FAHRRAD
VÉLO ÉLECTRIQUEMENT ASSISTÉ

(43) Date of publication of application: 23.03.2016
(73) Proprietor: Panasonic Intellectual Property Management Co., Ltd., Osaka-shi, Osaka 540-6207 (JP)
(72) Inventor: KAWAKAMI, Masafumi, Osaka-shi, Osaka 540-6207 (JP); OZAWA, Satoshi, Osaka-shi, Osaka 540-6207 (JP); FUJII, Naoki, Osaka-shi, Osaka 540-6207 (JP)
(74) Representative: Grünecker Patent- und Rechtsanwälte PartG mbB
(86) International application number: PCT/JP2013/003109
(87) International publication number: WO 2014/184826

(56) References cited:
- WO-A1-2012/035682
- JP-A- H 092 368
- JP-A- H1 059 259
- JP-A- 2004 142 634
- JP-A- 2009 208 710
- US-A- 5 909 781

## Description

### Technical Field

The present invention relates to an electric assist bicycle capable of traveling with a combination of a human driving force generated by a pedal force from a pedal and an auxiliary driving force generated by a motor. US-A-5 909 781 discloses an electric assist bicycle having the features of the preamble of claim 1.

### Background Art

A known electric assist bicycle including a motor powered from a power storage such as a battery detects a human driving force, which includes a pedal force applied to a pedal, by means of a torque sensor and adds an auxiliary driving force (assisting force) of the motor according to the human driving force. Thus, such an electric assist bicycle can smoothly travel on an uphill and so on.

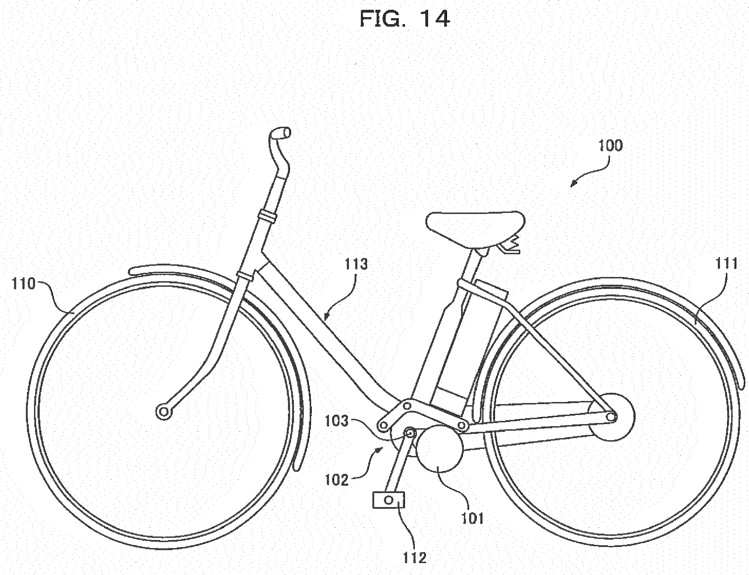

For example, as shown in FIG. 14, a motor drive unit 102 containing a motor 101 and so on is disposed at the location of a crank shaft 103 in an electric assist bicycle (for example, Patent Literature 1). Moreover, an electric assist bicycle 100 configured thus has the relatively heavy motor drive unit 102 that is disposed at a low position at the center of the electric assist bicycle 100 (that is, the intermediate point between the front wheel and the rear wheel) in the longitudinal direction thereof. Thus, a front wheel 110 and a rear wheel 111 of the electric assist bicycle 100 configured thus can be more easily lifted than an electric assist bicycle having a motor in the hub of the front or rear wheel. Such an electric assist bicycle 100 can easily pass over a step of a path, achieving ease of handling a body 113 and high traveling stability.

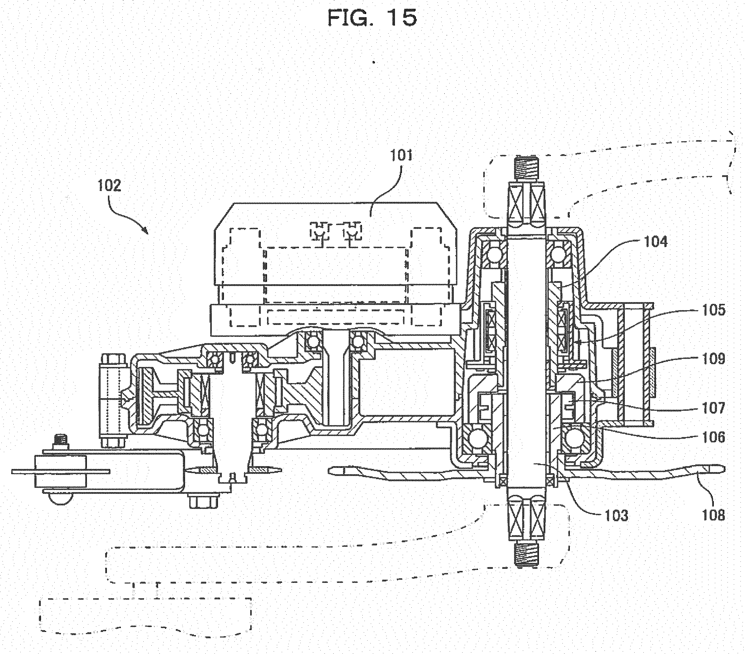

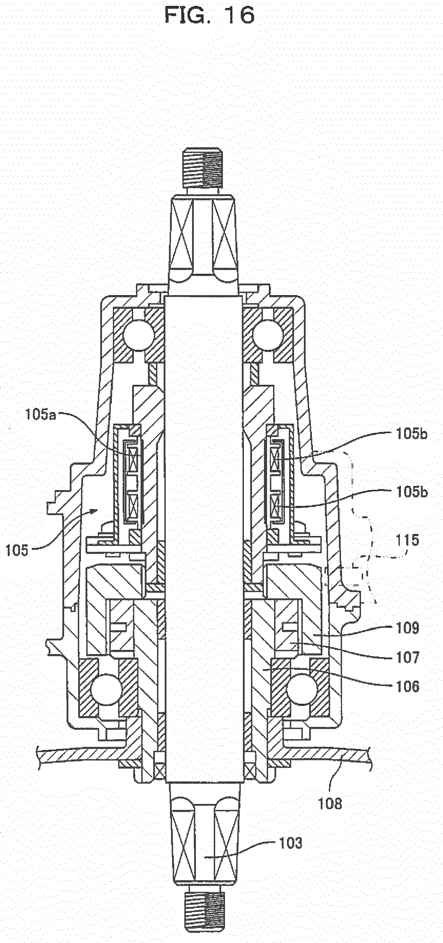

In the motor drive unit 102 configured thus, as shown in FIGS. 15 and 16, a magneto-striction torque sensor 105 that detects a human driving force may be provided on the outer periphery of a human power transmission member (intermediate shaft) 104 that receives a human driving force transmitted from the crank shaft 103 and a portion opposed to the outer periphery. Specifically, a magneto-striction generation portion 105a is formed on the outer periphery of the human power transmission member 104 and coils 105b for detecting a change of magnetism are disposed in a noncontact manner so as to be opposed to the magneto-striction generation portion 105a. When right and left pedals 112 (see FIG. 14) are pressed, the crank shaft 103 is twisted by a pedal force (human driving force), allowing the torque sensor 105 to detect a twisted state of the human power transmission member 104 that receives a human driving force transmitted from the crank shaft 103.

In FIGS. 15 and 16, reference numeral 106 denotes an interlocking member (inner portion) connected to a cylinder (outer portion) 109, which is fit onto the human power transmission member 104 via a one-way clutch (claw member) 107. Reference numeral 108 denotes a driving sprocket serving as a driving force output wheel attached to the end of the interlocking member 106.

As disclosed in, for example, Patent Literature 2, the motor drive unit of an electric assist bicycle may mechanically detect a torque (human driving force). In this structure, however, components come into contact with each other at a torque detection point so as to cause a mechanical resistance. If the remaining output amount of a battery runs out and an auxiliary driving force cannot be added, a load to a rider may disadvantageously increase.

In contrast, in the motor drive unit 102 that detects a torque (human driving force) by means of the magneto-striction torque sensor 105 shown in FIGS. 14 to 16, the coils 105b for detecting a torque (human driving force) are not in contact with the magneto-striction generation portion 105a. Thus, even if the remaining output amount of a battery runs out and an auxiliary driving force cannot be added, a load is hardly applied to a rider.

In the motor drive unit 102, the magneto-striction generation portion 105a is formed on the human power transmission member 104 that is a separated member from the crank shaft 103, providing the following advantage:
A bending stress is applied to the two ends of the crank shaft 103 in addition to a torque (human driving force) applied in the rotation direction. The bending stress is a rider's weight partially applied downward from a rider's foot via the pedals 112 so as to bend the crank shaft 103. Thus, if the magneto-striction generation portion is formed on the crank shaft, the bending stress may cause an external disturbance factor or noise, leading to lower torque detection capability. Moreover, a material sufficiently resistant to a large bending stress needs to be selected for the crank shaft, considerably limiting the scope of selection of materials. In some cases, only a material having low torque detection capability may be selected.

In the motor drive unit 102 shown in FIGS. 14 to 16, the magneto-striction generation portion 105a is formed on the human power transmission member 104 that is a separated member from the crank shaft 103, and thus the magneto-striction generation portion 105a is less affected by a bending stress than the crank shaft 103. This can achieve higher torque detection capability than in the formation of the magneto-striction generation portion on the crank shaft. Moreover, the human power transmission member 104 can be made of a material suitable for forming the magneto-striction generation portion 105a on the outer periphery of the human power transmission member 104, thereby improving the torque detection capability.

The one-way clutch (claw member) 107 is provided in the motor drive unit 102 for the following reason: even if a rider stops pressing the pedals 112 on such a conventional electric assist bicycle, the motor 101 is controlled so as to keep rotating for a while (so-called delay control is performed). In this case, the absence of the one-way clutch 107 may transmit an auxiliary driving force from the motor 101 to the crank shaft 103, causing the pedals 112 to rotate without being pedaled by the rider. Thus, the one-way clutch 107 interrupts an auxiliary driving force from the motor 101 so as not to apply such a force to the crank shaft 103 or the pedals 112.

The motor drive unit 102 including the magneto-striction torque sensor 105 may be provided with a rotation sensor 115 (see FIG. 16) that detects the rotations of the crank shaft 103 and so on. In the motor drive unit 102, the rotation sensor 115 faces the outer periphery of the cylinder (outer portion) 109 engaged with the human power transmission member 104. Rotation detecting teeth, permanent magnets and the like are fixed on the outer periphery of the cylinder (outer portion) 109. If the rotation detecting teeth are formed, the rotation sensor 115 is a so-called pickup sensor (magnetic sensor) including a permanent magnet and a coil.

### Citation List

### Patent Literatures

Patent Literature 1: Japanese Patent Laid-Open No. 2009-208710
Patent Literature 2: Japanese Patent Laid-Open No. 10-81292

### Summary of Invention

### Technical Problem

In the motor drive unit 102 shown in FIGS. 14 to 16, however, a permanent magnet and so on provided in the rotation sensor 115 or the cylinder (outer portion) 109 are close to the magneto-striction torque sensor 105. This may cause an external disturbance factor or noise, leading to lower torque detection capability.

The present invention has been devised to solve the problem. An object of the present invention is to provide an electric assist bicycle that can detect a torque by means of a magneto-striction torque sensor, detect the rotations of a crank shaft and so on, and keep high torque detection capability without transmitting an auxiliary driving force from a motor to the crank shaft when a rider stops pedaling.

### Solution to Problem

In order to solve the problem, an electric assist bicycle according to the present invention is an electric assist bicycle capable of traveling with a combination of a human driving force generated by a pedal force from a pedal and an auxiliary driving force generated by a motor provided in a motor drive unit disposed at the intermediate position between a front wheel and a rear wheel, the electric assist bicycle being configured such that a cylindrical human power transmission member for receiving a transmitted human driving force is disposed on the outer periphery of a crank shaft for receiving the human driving force from the pedal, the human power transmission member having a magneto-striction generation portion for a torque sensor for detecting the human driving force, an interlocking member is disposed on the outer periphery of the crank shaft so as to receive, from one end of the interlocking member, the human driving force transmitted from the human power transmission member and includes a driving force output wheel attached to another end of the interlocking member so as to be coaxial with the crank shaft, and a driving force from the interlocking member is transmitted to the rear wheel through the driving force output wheel and an endless driving force transmission member looped over the human driving force output wheel, the human power transmission member being engaged with an intermediate cylinder provided on the outer periphery of the crank shaft with a one-way clutch disposed between the intermediate cylinder and the interlocking member, the electric assist bicycle further including a rotation detector that detects a rotation of one of the intermediate cylinder and the human power transmission member, the rotation detector being an optical sensor.

With this configuration, the magneto-striction torque sensor can detect a torque and the rotation detector can detect a rotation of the intermediate cylinder or the human power transmission member and a rotation of the crank shaft or the pedal. Moreover, the one-way clutch disposed between the intermediate cylinder and the interlocking member can prevent transmission of an auxiliary driving force from the motor to the crank shaft when a rider stops pedaling. Since an optical sensor is used as the rotation detector that detects a rotation of the intermediate cylinder or the human power transmission member, the rotation detector does not cause an external disturbance factor or noise that reduces torque detection capability when a torque (human driving force) is detected, unlike a magnetic sensor used as the rotation detector. This can achieve satisfactory torque detection.

The present invention further includes a rotating body attached to a position corresponding to the rotation detector on the outer periphery of the intermediate cylinder or the human power transmission member, the rotating body blocking or reflecting light of the optical sensor. In this configuration, a rotation of the crank shaft may be detected by detecting light emitted to the rotating body provided on the crank shaft so as to block or reflect light of the optical sensor. In this configuration, however, the rotating body blocking or reflecting light of the optical sensor is attached to the outer periphery of the intermediate cylinder or the human power transmission member, and thus the location of the rotating body has a larger diameter than in the case where the rotating body for blocking or reflecting light of the optical sensor is provided on the crank shaft. This can improve the resolution of the rotation detector. In a specific example of the rotating body, the rotating body includes a disc or cylinder having circumferentially formed toothing parts, and outgoing parts and light receiving parts are provided between the toothing parts. In this case, the disc or cylinder having the toothing parts is attached to the intermediate cylinder or the human power transmission member having a larger diameter than the crank shaft. This can increase the number of the toothing parts located with a relatively large diameter without drastically increasing dimensions radially from the inner part to the outer part of the disc or cylinder, thereby improving the resolution of the rotation detector as compared with in the formation of the toothing parts located with a relatively small diameter. In order to obtain the same resolution for the rotation detector in the attachment of the rotating body to the crank shaft, the dimensions of the disc or cylinder having the toothing parts may be increased radially from the inner part to the outer part of the disc or cylinder. In this case, the disc or cylinder having the toothing parts is likely to be deformed. To address this problem, the rotating body is attached to the intermediate cylinder or the human power transmission member that is provided on the outer periphery of the crank shaft, eliminating the need for drastically increasing dimensions radially from the inner part to the outer part of the disc or cylinder. This can minimize the possibility of deformation of the rotating body.

The rotation detector of the present invention is configured so as to detect a stopped or reversed rotation of the pedal. This configuration can detect a stopped or reversed rotation of the pedal.

According to the present invention, the interlocking member combines a human driving force transmitted through the human power transmission member and an auxiliary driving force from the motor. The interlocking member may be replaced with an auxiliary driving force output wheel that is engaged with the endless driving force transmission member so as to output an auxiliary driving force outputted from the motor.

The present invention further includes a deceleration mechanism disposed on an auxiliary-driving-force transmission path, the deceleration mechanism including a reduction gear and a reduction gear support shaft that supports the reduction gear; and a one-way clutch for interrupting a human driving force, the one-way clutch being provided between the reduction gear and the reduction gear support shaft so as to prevent transmission of a human driving force to the motor.

With this configuration, even if the pedals are rotated when a battery runs out, the one-way clutch for interrupting a human driving force is provided between the reduction gear and the reduction gear support shaft so as to eliminate the need for rotating the reduction gear and motor. Thus, it is not necessary to apply an excessive force to the pedals.

According to the present invention, the motor, the deceleration mechanism, and a control unit are assembled into the motor drive unit, and the motor and the control unit overlap each other in side view and are opposed to each other in the width direction of the motor drive unit.

With this configuration, the area of the motor drive unit in side view (laterally projected area) can be advantageously reduced (made more compact). The motor and the control unit are opposed to each other in the width direction of the motor drive unit and thus the control unit is hardly affected by heat from the motor so as to keep high reliability.

### Advantageous Effects of Invention

According to the present invention, the cylindrical human power transmission member and the intermediate cylinder engaged with the human power transmission member are provided on the outer periphery of the crank shaft, the human power transmission member having the magneto-striction generation portion for the torque sensor for detecting a human driving force, and the rotation detector for detecting a rotation of the intermediate cylinder or the human power transmission member is an optical sensor. This configuration can easily and reliably detect a rotation of the intermediate cylinder or the human power transmission member that rotates integrally with the crank shaft, without magnetically affecting the torque sensor. The torque sensor may serve as the rotation detector. As compared with the case where the torque sensor serves as the rotation detector, rotations can be easily and reliably detected under simple control, advantageously leading to quick detection.

Furthermore, the rotating body that blocks or reflects light of an optical sensor is attached to the position corresponding to the rotation detector on the outer periphery of the intermediate cylinder or the human power transmission member, allowing the rotation detector to have a relatively high resolution. Also in the case where the rotating body is a disc or cylinder attached to the outer periphery of the intermediate cylinder or the human power transmission member with the toothing parts formed around the disc or cylinder, it is not necessary to drastically increase dimensions radially from the inner part to the outer part of the rotating body. This can minimize the possibility of deformation of the toothing parts and so on, thereby keeping high reliability.

Furthermore, the deceleration mechanism is disposed on the auxiliary-driving-force transmission path, the deceleration mechanism including the reduction gear and the reduction gear support shaft that supports the reduction gear. The one-way clutch for interrupting a human driving force is provided to prevent transmission of a human driving force to the motor, between the reduction gear and the reduction gear support shaft. Thus, even if the pedals are pressed and rotated when a battery runs out, the reduction gears and the motor do not need to be rotated, eliminating the need for applying an excessive force to the pedals (a so-called drag resistance can be considerably reduced).

The motor, the deceleration mechanism, and the control unit are assembled into the motor drive unit. Moreover, the motor and the control unit overlap each other in side view and are opposed to each other in the width direction in front view (or planar view). With this configuration, the area of the motor drive unit in side view (laterally projected area) can be reduced (made more compact), particularly as a single-shaft motor drive unit. The control unit is hardly affected by heat from the motor so as to keep high reliability.

### Brief Description of Drawings

[FIG. 1] FIG. 1 is an overall side view of an electric assist bicycle according to an embodiment of the present invention.
[FIG. 2] FIG. 2 is a partially cut side view of the electric assist bicycle.
[FIG. 3] FIG. 3 is a side view of the motor drive unit of the electric assist bicycle (a driving sprocket is omitted).
[FIG. 4] FIG. 4 is a plane section showing the motor drive unit of the electric assist bicycle (a plan section taken along line IV-IV of FIG. 3).
[FIG. 5] FIG. 5 is an enlarged plane section showing the principal part of the motor drive unit of the electric assist bicycle.
[FIG. 6] FIG. 6 is a side view showing a rotation detector and a rotating body for the motor drive unit of the electric assist bicycle.
[FIG. 7] FIG. 7 is an explanatory drawing showing the operations of the rotation detector and the rotating body for the motor drive unit.
[FIG. 8] FIG. 8 is an explanatory drawing showing the operations of the rotation detector and the rotating body for the motor drive unit.
[FIG. 9] FIG. 9 is an enlarged plane section showing the motor drive unit of an electric assist bicycle according to another embodiment of the present invention.
[FIG. 10] FIG. 10 is a partially cut side view showing an electric assist bicycle according to still another embodiment of the present invention.
[FIG. 11] FIG. 11 is a plane section showing the motor drive unit of the electric assist bicycle.
[FIG. 12] FIG. 12 is an enlarged plane section showing the principal part of the motor drive unit of the electric assist bicycle.
[FIG. 13] FIG. 13 is an enlarged plane section showing the principal part of the motor drive unit of an electric assist bicycle according to still another embodiment of the present invention.
[FIG. 14] FIG. 14 is a side view of a conventional electric assist bicycle.
[FIG. 15] FIG. 15 is a plane section showing the motor drive unit of the conventional electric assist bicycle.
[FIG. 16] FIG. 16 is a plane section showing the principal part of the motor drive unit of the conventional electric assist bicycle.

### Description of Embodiments

An electric assist bicycle according to embodiments of the present invention will be described below with reference to the accompanying drawings. In the following explanation, a lateral direction and a longitudinal direction are set relative to the traveling direction of a rider on an electric assist bicycle 1. The present invention is not limited to the following configurations.

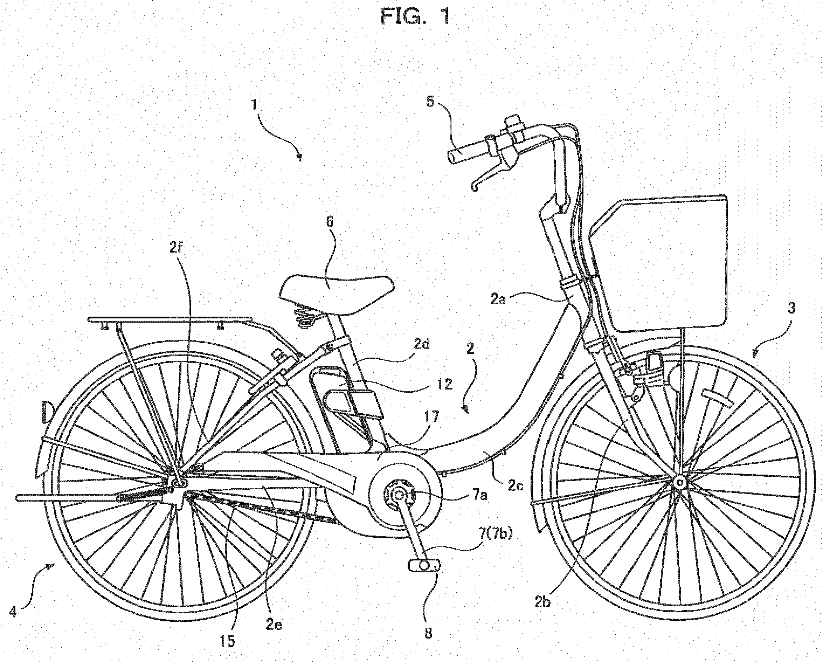

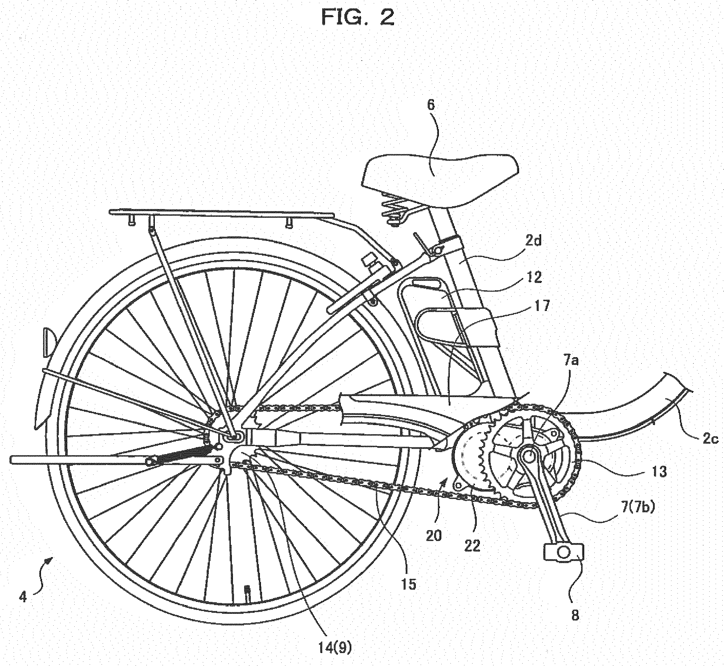

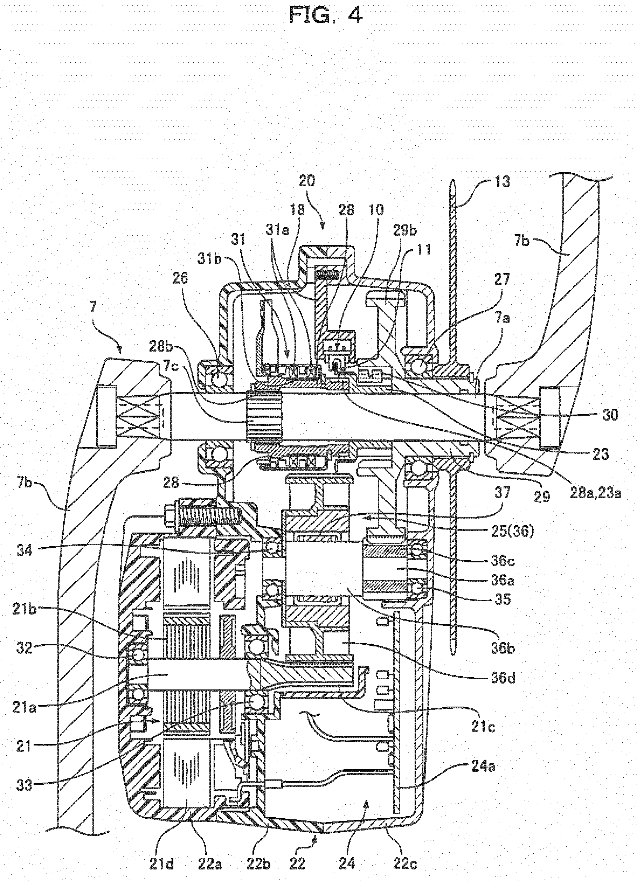

In FIGS. 1 and 2, reference numeral 1 denotes the electric assist bicycle according to the embodiment of the present invention. As shown in FIGS. 1 and 2, the electric assist bicycle 1 includes a metallic frame 2 having a head tube 2a, a front fork 2b, a main tube 2c, a seat tube 2d, a chain stay 2e, and a seat stay 2f, a front wheel 3 rotatably attached to the lower end of the front fork 2b, a rear wheel 4 rotatably attached to the rear end of the chain stay 2e, a handle bar 5 that changes the direction of the front wheel 3, a saddle 6, a crank 7 and pedals 8 that receive a human driving force including a pedal force, a motor drive unit 20 including an electric motor 21 (see FIG. 4) serving as a driving source for generating an auxiliary driving force (assist force) and a control unit 24 (see FIG. 4) for electrically controlling the motor 21 and so on, a battery 12 including a secondary battery for supplying driving power to the motor 21, a manual operation part (not shown) that is attached to, for example, the handle bar 5 so as to be operated by a rider and so on, a driving sprocket (may be called a front sprocket, a crank sprocket, or a front gear) 13 that is attached so as to coaxially rotate with a crank shaft 7a and serves as a driving force output wheel for outputting the resultant force of a human driving force and an auxiliary driving force, a rear sprocket (may be called a rear gear) 14 serving as a rear wheel attached to a hub (also called a rear hub) 9 of the rear wheel 4, a chain 15 serving as an endless driving force transmission member rotatably wound around the driving sprocket 13 and the rear sprocket 14 in an endless manner, and a chain cover 17 that laterally covers the chain 15 and so on. The battery 12 is an example of a power storage and is preferably a secondary battery. Another example of a power storage may be a capacitor. The crank 7 includes crank arms 7b that are laterally provided and the crank shaft 7a that connects the right and left crank arms 7b.

As shown in FIGS. 1 and 2, also in the electric assist bicycle 1, the motor drive unit 20 is disposed at the intermediate position between the front wheel 3 and the rear wheel 4, for example, substantially behind the crank shaft 7a (specifically, under the intermediate position). This configuration locates the relatively heavy motor drive unit 20 at the center of the electric assist bicycle 1 in the longitudinal direction. Thus, the front wheel 3 and the rear wheel 4 are easily lifted and the electric assist bicycle can easily pass over a step of a path, achieving ease of handling of the body (e.g., the frame 2) of the electric assist bicycle 1 and high traveling stability.

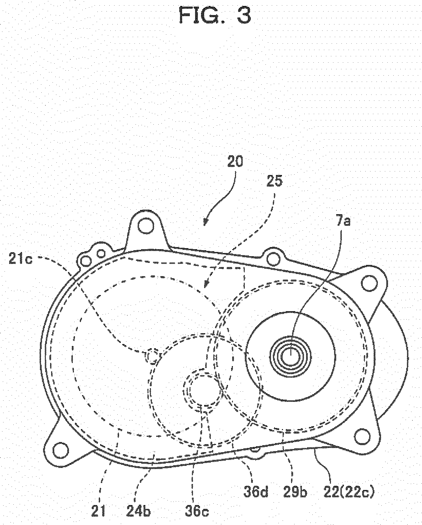

FIG. 3 is a side view of the motor drive unit 20 (the driving sprocket 13 is omitted). FIG. 4 is a plane section showing the motor drive unit 20.

As shown in FIGS. 3 and 4, the motor drive unit 20 includes a unit case 22 constituting an outer case. The unit case 22 includes a motor case 22a, a left case 22b, and a right case 22c. The crank shaft 7a laterally penetrates the front of the motor drive unit 20. Moreover, the outer periphery of the crank shaft 7a has a human power transmission member 28 that is substantially cylindrical and receives a human driving force transmitted from the crank shaft 7a, an intermediate cylinder 23 that receives the human driving force transmitted from the human power transmission member 28, and an interlocking member 29 acting as a combined-force member that receives the human driving force from the intermediate cylinder 23 through a one-way clutch (a one-way clutch for interrupting an auxiliary driving force) 30 and combines the human driving force transmitted through the human power transmission member 28 and so on and an auxiliary driving force from the motor 21. Furthermore, a deceleration mechanism 25 including a reduction gear 36 is disposed at the center of the unit case 22 in the longitudinal direction, the motor 21 is disposed on the left side of the rear of the unit case 22, and the control unit 24 is disposed on the right side of the rear of the unit case 22. The control unit 24 includes a control printed circuit board 24a that has electronic components for performing kinds of electrical control and a storage containing kinds of information.

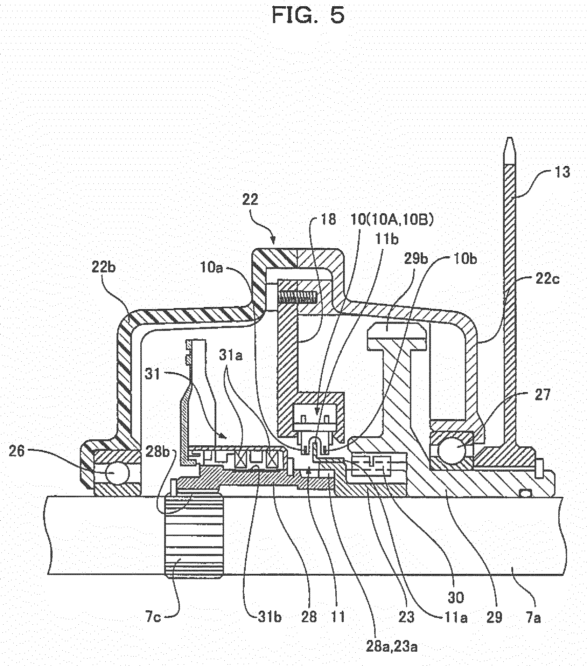

Specifically, as shown in FIGS. 4 and 5, the crank shaft 7a laterally penetrating the front of the motor drive unit 20 is rotatably disposed with bearings 26 and 27. The cylindrical human power transmission member 28 is fit onto the outer periphery of the left part of the crank shaft 7a via a serration part (or spline part) 7c such that the human power transmission member 28 rotates as an integral part. Moreover, a serration part (or spline part) 28b is formed at a point corresponding to the serration part (or spline part) 7c of the crank shaft 7a inside the human power transmission member 28. The serration part 28b is engaged with the serration part (spline part) 7c of the crank shaft 7a.

A magneto-striction generation portion 31b having magnetic anisotropy is formed on the outer surface of the human power transmission member 28. Coils 31a are disposed with a certain clearance (space) on the outer periphery of the magneto-striction generation portion 31b. The magneto-striction generation portion 31b and the coils 31a constitute a magneto-striction torque sensor (human power detection part) 31. With this configuration, a human driving force from the crank shaft 7a is transmitted to the human power transmission member 28 and is detected by the torque sensor 31. In the magneto-striction torque sensor 31, the magneto-striction generation portion 31b is spirally formed with an angle of, for example, +45° to -45° with respect to the axial direction of the human power transmission member 28. When a human driving force is transmitted to the human power transmission member 28, the magneto-striction generation portion 31b on the surface of the human power transmission member 28 is distorted so as to cause portions thereof to increase or decrease in magnetic permeability. Thus, a difference in the inductance of the coil 31a is measured so as to detect the magnitude of a torque (human driving force). In the present embodiment, this configuration even allows, but not exclusively, detection of a reverse rotation of the crank shaft 7a.

The intermediate cylinder 23 is disposed next to the right side of the human power transmission member 28 on the outer periphery of the crank shaft 7a so as to rotate with respect to the crank shaft 7a. The intermediate cylinder 23 is fit with a serration part (or spline part) 28a formed on the outer periphery of the right end of the human power transmission member 28 and a serration part (or spline part) 23a formed on the inner periphery of the left end of the intermediate cylinder 23. In the present embodiment, the serration part (or spline part) 23a formed on the inner periphery of the left end of the intermediate cylinder 23 is fit onto the serration part (or spline part) 28a of the human power transmission member 28.

As has been discussed, the one-way clutch (one-way clutch for interrupting an auxiliary driving force) 30 is disposed between the intermediate cylinder 23 and the interlocking member 29, the intermediate cylinder 23 is attached inside the one-way clutch 30, and the interlocking member 29 is attached to the outside of the one-way clutch 30. The interlocking member 29 is disposed on the outer periphery of the crank shaft 7a so as to rotate with respect to the crank shaft 7a and receive an auxiliary driving force from the motor 21. The one-way clutch 30 transmits a human driving force from the intermediate cylinder 23 to the interlocking member 29 in a forward direction but does not transmit an auxiliary driving force from the interlocking member 29 to the crank shaft 7a or the pedals 8 through the intermediate cylinder 23 in the forward direction. In other words, even if a rider stops pressing the pedals 8 on the electric assist bicycle 1, so-called delay control is conducted so as to keep rotating the motor 21 for a while. The one-way clutch 30 interrupts an auxiliary driving force so as to prevent the crank shaft 7a and the pedals 8 from keeping rotating.

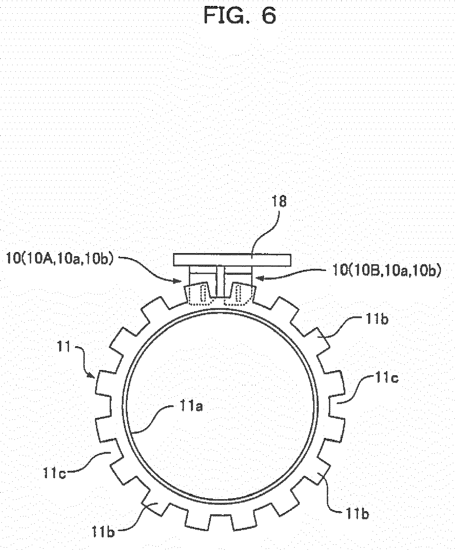

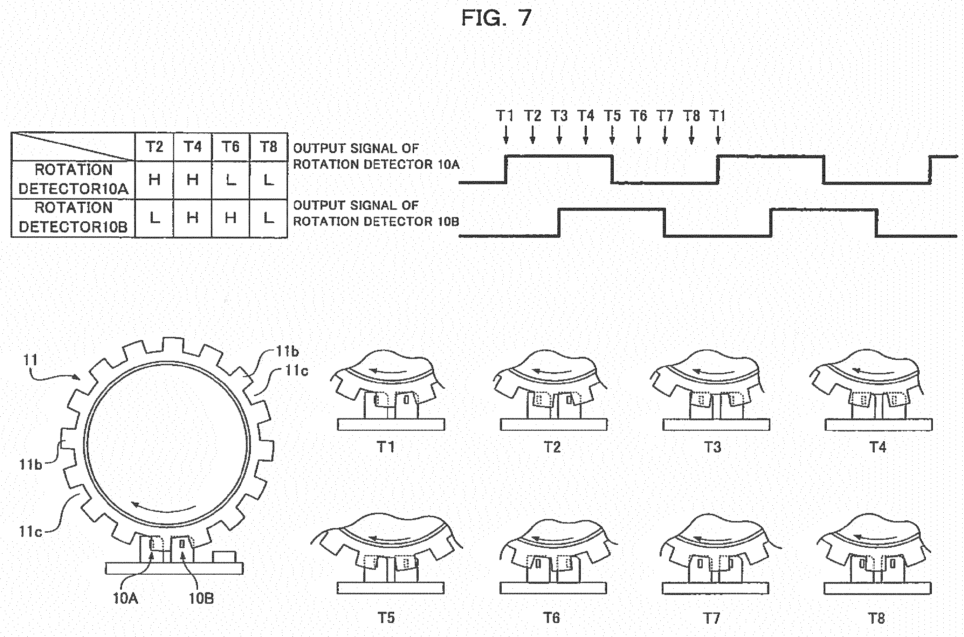

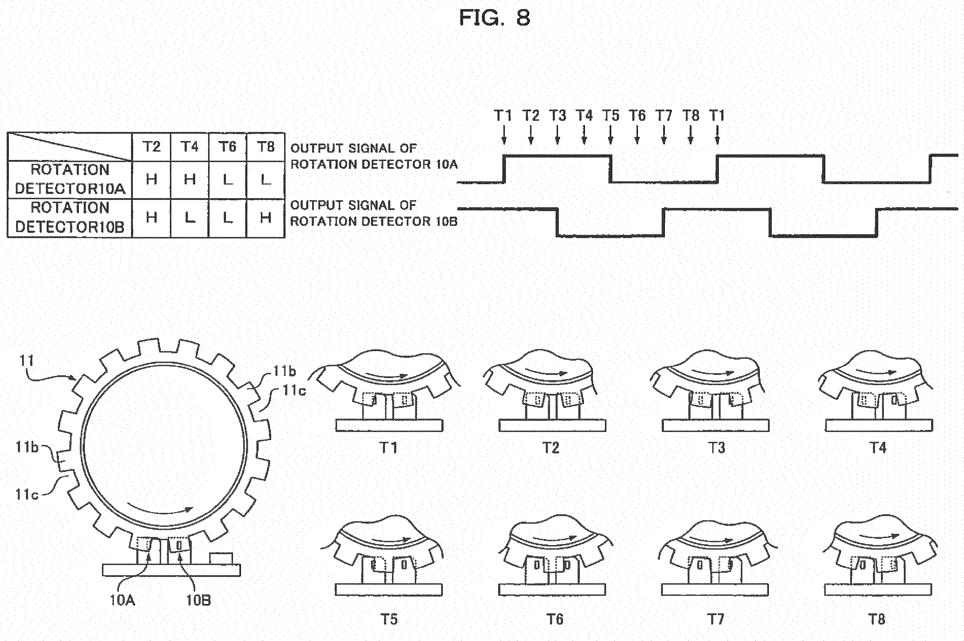

As shown in FIGS. 5 and 6, the motor drive unit 20 includes the intermediate cylinder 23 that is a member rotating integrally with the crank shaft 7a and two rotation detectors 10 (10A and 10B) that detect the rotations of the crank shaft 7a and the pedals 8. In the present embodiment, a pair of optical sensors, each of which includes an outgoing part 10a and a light receiving part 10b, are disposed in parallel (specifically, in the rotation direction of toothing parts 11b of a rotating body 11 that is described later) so as to constitute the rotation detectors 10 (10A and 10B, see FIGS. 6 to 8). The rotating body 11 that passes or interrupts light from the rotation detectors 10 (10A and 10B) is attached to the outer periphery of the left end of the intermediate cylinder 23. The rotating body 11 has a substantially cylindrical mounting part 11a that is attached and fixed to the outer periphery of the left end of the intermediate cylinder 23 and the toothing parts (light-shielding parts) 11b that are circumferentially extended like comb toothing parts from the left end of the mounting part 11a. The toothing parts 11b and tooth spaces (light passage parts) 11c between the toothing parts 11b pass through a light emitting path between the outgoing part 10a and the light receiving part 10b of the rotation detector 10 (10A, 10B). Thus, the rotation detector 10 detects the number of revolutions (the amount of rotation) of the intermediate cylinder 23, the crank shaft 7a, or the pedals 8. As shown in FIGS. 7 and 8 (the layout is reversed from FIG. 6), the two rotation detectors 10A and 10B are disposed so as to output signals with a phase difference of 90°. This varies input signals depending on the rotation directions of the rotation detectors 10A and 10B, thereby detecting the forward and backward directions of the intermediate cylinder 23, the crank shaft 7a, or the pedals 8 based on an input signal. As shown in FIGS. 4 and 5, in the present embodiment, the rotation detector 10 is attached to the installation point of the rotating body 11 via a support member 18 extended rearward from the inside of the front end of the unit case 22.

Moreover, a large-diameter gear 29b for receiving an auxiliary driving force from the motor 21 is integrally formed on the outer periphery of the left side of the interlocking member 29 while the driving sprocket 13 serving as a driving force output wheel is fit onto the outer periphery of the right end of the interlocking member 29 so as to rotate integrally with the interlocking member 29. The bearing 27 fit onto the interlocking member 29 rotatably supports the crank shaft 7a via the interlocking member 29. A thin bearing or the like may be disposed between the interlocking member 29 and the crank shaft 7a, between the intermediate cylinder 23 and the crank shaft 7a, or between the inner surface of the right side of the human power transmission member 28 and the crank shaft 7a.

As shown in FIG. 4, the motor 21 has a rotating shaft 21a and a rotor 21b that are rotatably supported by bearings 32 and 33. The rotating shaft 21a of the motor 21 protrudes to the right. A toothing part 21c is formed around the protruding part. The deceleration mechanism 25 is configured such that the running torque (auxiliary driving force) of the motor 21 is amplified and is transmitted to the large-diameter gear 29b of the interlocking member 29 through the reduction gear 36. In this configuration, a reduction-gear small-diameter support shaft (an example of the reduction-gear support shaft, will be simply abbreviated as a small-diameter support shaft) 36a rotatably supported by bearings 34 and 35 and a reduction-gear large-diameter support shaft (another example of the reduction-gear support shaft, will be simply abbreviated as a large-diameter support shaft) 36b having a larger diameter than the small-diameter support shaft 36a are integrally formed on the support shaft (reduction-gear support shaft) of the reduction gear 36. A deceleration small-diameter gear (an example of the reduction gear, will be simply abbreviated as a small-diameter gear) 36c, which is a separate part of the small-diameter support shaft 36a, is assembled to the outer periphery of the small-diameter support shaft 36a so as to rotate integrally with the small-diameter support shaft 36a via a press-fitted or serration part (or spline part). Moreover, the small-diameter gear 36c is engaged with the large-diameter gear 29b of the interlocking member 29. Meanwhile, a reduction large-diameter gear (another example of the reduction gear, will be simply abbreviated as a large-diameter gear) 36d is disposed on the outer periphery of the large-diameter support shaft 36b of the reduction gear 36, and the large-diameter gear 36d is engaged with the toothing part 21c of the rotating shaft 21a of the motor 21. Between the large-diameter support shaft 36b and the large-diameter gear 36d of the reduction gear 36, a one-way clutch 37 for interrupting a human driving force is provided to prevent transmission of a turning force from the interlocking member 29 to the motor 21.

If the inner periphery of the large-diameter gear 36d of the reduction gear 36 is rotated based on a motor output (auxiliary driving force), e.g., a certain auxiliary driving force during traveling is outputted, in a direction in which the driving sprocket 13 moves forward relative to the outer periphery of the large-diameter support shaft 36b opposed to the large-diameter gear 36d (e.g., if the number of revolutions of the inner periphery of the large-diameter gear 36d of the reduction gear 36 in the forward direction is larger than that of the outer periphery of the large-diameter support shaft 36b, which is opposed to the large-diameter gear 36d, in the forward direction), the one-way clutch 37 operates so as to transmit an auxiliary driving force, which has been transmitted to the large-diameter gear 36d of the reduction gear 36, directly to the large-diameter support shaft 36b. Moreover, the auxiliary driving force is transmitted to the large-diameter gear 29b of the interlocking member 29 via the small-diameter support shaft 36a and the small-diameter toothing part 36c. Thus, a human driving force and the auxiliary driving force are combined in the interlocking member 29 and the resultant force is transmitted from the driving sprocket 13 serving as a driving force output wheel to the rear wheel 4 through the chain 15.

On the other hand, if the inner periphery of the large-diameter gear 36d of the reduction gear 36 is rotated based on a motor output (auxiliary driving force), e.g., the battery 12 runs out and the pedals 8 are pressed without an auxiliary driving force outputted from the motor 21, opposite to the direction in which the driving sprocket 13 moves forward relative to the outer periphery of the large-diameter support shaft 36b opposed to the large-diameter gear 36d (if the number of revolutions of the inner periphery of the large-diameter gear 36d of the reduction gear 36 in the forward direction is smaller than that of the outer periphery of the large-diameter support shaft 36b, which is opposed to the large-diameter gear 36d, in the forward direction), the auxiliary driving force transmitted to the large-diameter gear 36d of the reduction gear 36 is interrupted by the one-way clutch 37 so as not to be transmitted to the large-diameter support shaft 36b.

With this configuration, if the battery 12 runs out and the pedals 8 are pressed without an auxiliary driving force outputted from the motor 21, a human driving force rotates the small-diameter gear 36c, the small-diameter support shaft 36a, and the large-diameter support shaft 36b but does not rotate the large-diameter gear 36d and the rotating shaft 21a and the rotor 21b of the motor 21.

In this configuration, when the pedal 8 is pressed during forward traveling, a human driving force based on a pedal force applied to the pedal 8 is transmitted from the crank shaft 7a to the human power transmission member 28, the intermediate cylinder 23, and the interlocking member 29, and then the human driving force is detected by the torque sensor 31 provided on the human power transmission member 28. Moreover, an auxiliary driving force corresponding to the human driving force is transmitted to the interlocking member 29 through, for example, the reduction gear 36 of the deceleration mechanism 25, and then a resultant force combined on the interlocking member 29 is transmitted from the driving sprocket 13 to the rear wheel 4 through the chain 15. This can facilitate riding on an uphill road and so on with the auxiliary driving force (assist force) applied from the motor 21 corresponding to the human driving force.

If a rider stops pressing the pedals 8 during riding, the rotations of the crank shaft 7a and the intermediate cylinder 23 are also stopped, accordingly. Thus, the stopped state is detected by the rotation detector 10 and then the motor 21 is immediately stopped or braked. The motor 21 is immediately stopped or braked when a rider stops pressing the pedals 8 during riding, preventing excessive driving of the motor 21 so as to suppress exhaustion of the battery 12.

In this configuration, the rotation detector 10 (10A, 10B) is an optical sensor. This can easily and reliably detect a rotation of the intermediate cylinder 23 without magnetically affecting the torque sensor 31. Specifically, if the rotation detector 10 is an additionally provided magnetic sensor and a magnet is partially embedded into the intermediate cylinder or the rotation detector is a magnetometric sensor having a magnet, noise may occur during torque detection, for example, a magnetic field generated by the magneto-striction generation portion 31b may be changed, leading to deterioration of torque detection capability. Using an optical sensor as the rotation detector 10 can easily and reliably detect a rotation of the intermediate cylinder 23 while keeping high torque detection capability. Moreover, using an optical sensor as the rotation detector 10 can easily and reliably detect rotations under simple control, leading to quick detection. Advantageously, a stopped or reversed rotation of the pedals 8 and the crank shaft 7a can be quickly detected to stop the motor 21 immediately.

In this configuration, the rotating body 11 is attached to the outer periphery of the intermediate cylinder 23. Since the intermediate cylinder 23 is disposed on the outer periphery of the crank shaft 7a, the location of the rotating body 11 has a larger diameter than in the case where the rotating body 11 is provided on the crank shaft 7a. Thus, also in the attachment of the rotating body 11 radially having the same height, the number of the toothing parts lib formed on the rotating body 11 can be increased and rotations can be detected by the rotation detector 10 without failure, thereby improving the resolution of the rotation detector 10.

In order to obtain the same resolution for the rotation detector 10 when the rotation detector 10 including an optical sensor is attached to the crank shaft 7a, a disc having toothing parts or the like may be radially increased in size from the inner part to the outer part of the disc. In this case, a disc or cylinder having toothing parts or the like is likely to be deformed. In contrast, the attachment of the rotating body 11 to the intermediate cylinder 23 disposed on the outer periphery of the crank shaft 7a eliminates the need for extremely increasing dimensions radially from the inner part to the outer part of the rotating body 11. This can minimize the possibility of deformation on the toothing parts 11b of the rotating body 11 or the like.

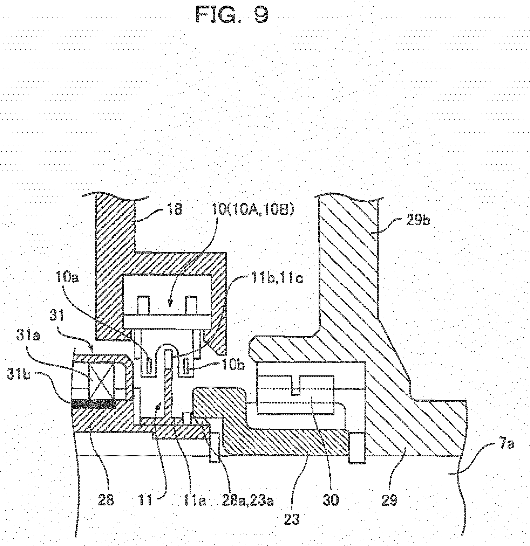

The rotating body 11 may be attached to, as shown in FIG. 9, the human power transmission member 28 disposed on the outer periphery of the crank shaft 7a, instead of to the intermediate cylinder 23. With this configuration, the installation point of the rotating body 11 is slightly smaller in diameter than the intermediate cylinder 23 and thus may lead to a smaller resolution. However, the human power transmission member 28 and the crank shaft 7a are integrally rotated, allowing satisfactory detection of the rotations of the human power transmission member 28, the crank shaft 7a, and the pedals 8. If the rotating body 11 is attached to the intermediate cylinder 23, the intermediate cylinder 23 is likely to be affected by vibrations and so on from the one-way clutch 30 for interrupting an auxiliary driving force, whereas if the rotating body 11 is attached to the human power transmission member 28, advantageously, the human power transmission member 28 is hardly affected by vibrations and so on from the one-way clutch 30.

The rotating body 11 is attached to the human power transmission member 28 by bonding or press-fitting. The rotating body 11 assembled to the human power transmission member 28 by press-fitting may cause distortion on the human power transmission member 28 due to a pressing force so as to adversely affect the torque sensor 31. In contrast, the rotating body 11 attached to the intermediate cylinder 23 does not cause such a problem and thus the rotating body 11 can be easily and reliably attached and fixed to the intermediate cylinder 23 without adversely affecting the torque sensor 31.

In the present embodiment, the rotating body 11 having the light-shielding toothing parts 11b is provided, but not exclusively, so as to detect light passing through the tooth spaces 11c between the toothing parts 11b. For example, the same rotating body and a light-receiving part at a light reflecting position may be provided to detect a rotational position or the number of revolutions in response to input of reflected light.

In the configuration, the rotation detector 10 for detecting the rotations of the interlocking member 29, the human power transmission member 28, and the crank shaft 7a is provided and the control unit 24 detects the forward rotations (the forward direction of the electric assist bicycle 1) of the interlocking member 29, the human power transmission member 28, and the crank shaft 7a. In this case, even if the bicycle temporarily slows down or a torque is changed by a pedal force temporarily reduced when the pedal 8 reaches a top dead center or a bottom dead center, a change of an auxiliary driving force may be controlled to a smaller change. This configuration can suppress a change of an auxiliary driving force during traveling, improving riding comfort.

Furthermore, in the configuration, the reduction gear 36 of the deceleration mechanism 25 is disposed on an auxiliary-driving-force transmission path from the motor 21 to the interlocking member 29, the deceleration mechanism 25 including the small-diameter and large-diameter gears 36c and 36d that serve as a plurality of reduction gears, and the small-diameter and large-diameter support shafts 36a and 36b that serve as reduction gear support shafts supporting the small-diameter and large-diameter gears 36c and 36d. In the present embodiment, between the large-diameter gear 36d and the large-diameter support shaft 36b, the one-way clutch 37 for interrupting a human driving force is provided to prevent transmission of a human driving force from the interlocking member 29 to the motor 21.

With this configuration, if the battery 12 runs out and the pedals 8 are pressed without an auxiliary driving force outputted from the motor 21, a human driving force rotates the small-diameter gear 36c, the small-diameter support shaft 36a, and the large-diameter support shaft 36b but does not rotate the large-diameter gear 36d and the rotating shaft 21a and the rotor 21b of the motor 21. Thus, it is not necessary to apply an excessive force to the pedals 8 (a so-called drag resistance can be considerably reduced).

In the present embodiment, as shown in FIG. 3, the motor 21 and the control unit 24 substantially overlap each other in side view. Thus, the area of the motor drive unit 20 in side view (laterally projected area) can be advantageously reduced (made more compact) as the motor drive unit 20 of a so-called single-shaft type that outputs a human driving force and an auxiliary driving force from a single shaft (in the present embodiment, the driving sprocket 13). The motor 21 and the control unit 24 in front and side views are opposed to each other in the width direction of the motor drive unit 20 (the motor 21 is disposed on the left side while the control unit 24 is disposed on the right side). Thus, the control unit 24 is hardly affected by heat from the motor 21 so as to keep high reliability.

In the present embodiment, the one-way clutch 37 for interrupting a human driving force is disposed between the large-diameter gear 36d and the large-diameter support shaft 36b. Instead, the one-way clutch 37 for interrupting a human driving force may be disposed between the small-diameter gear 36c and the small-diameter support shaft 36a.

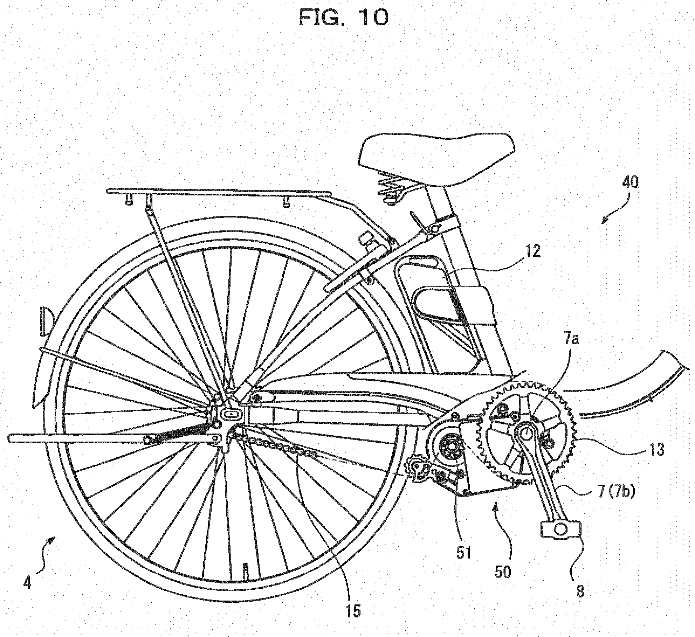

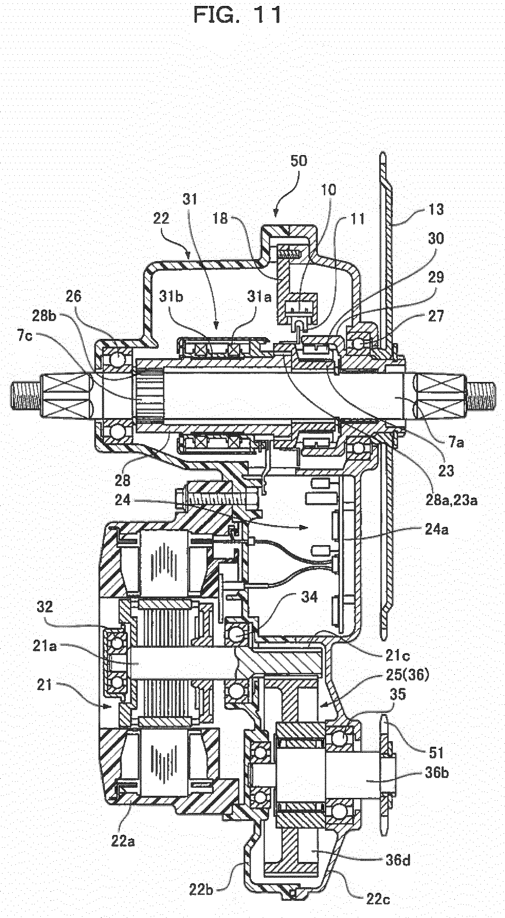

In the present embodiment, the electric assist bicycle 1 includes, but not exclusively, the motor drive unit 20 of a so-called single-shaft type that outputs a human driving force and an auxiliary driving force from the single shaft. As shown in FIGS. 11 to 13, an electric assist bicycle 40 of FIG. 10 includes a motor drive unit 50, a so-called double-shaft type that includes an auxiliary-driving-force output sprocket 51 serving as an auxiliary-driving-force output wheel for outputting an auxiliary driving force from the motor 21, in addition to the driving sprocket 13 serving as a human-driving-force output wheel disposed on one end of the crank shaft 7a. In the motor drive unit 50, the rotation detector 10 includes an optical sensor for detecting a rotation of the intermediate cylinder 23 or the human power transmission member 28 that rotates integrally with the crank shaft 7a.

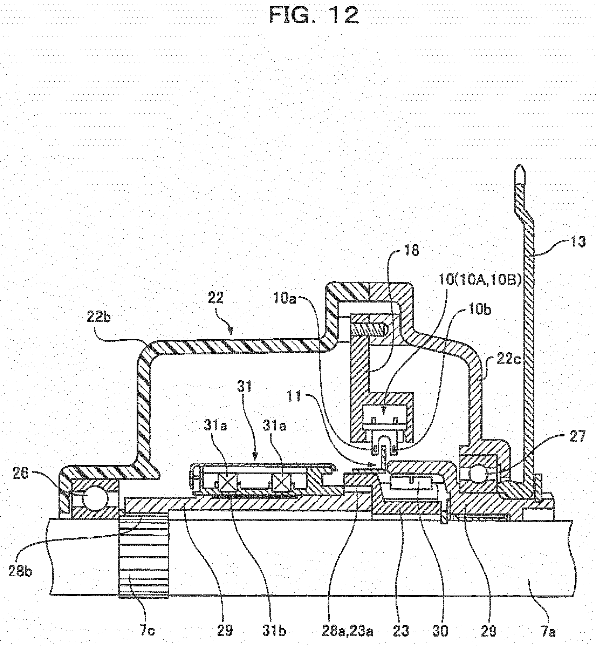

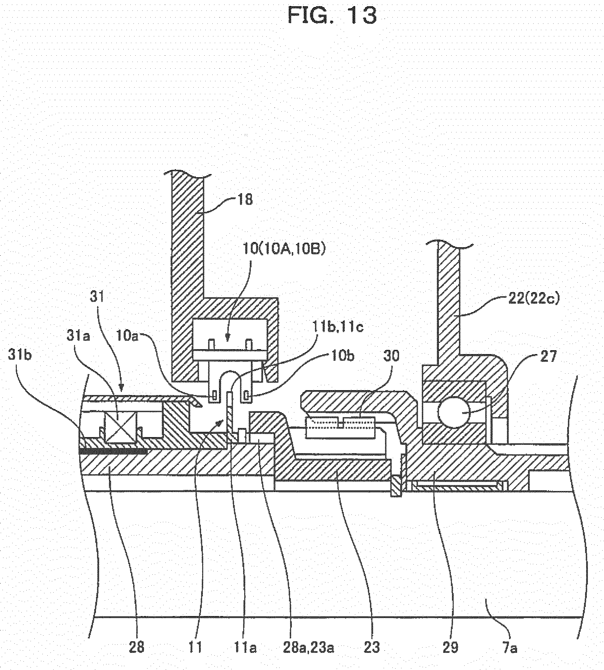

As shown in FIGS. 11 and 12, in the present embodiment, an auxiliary driving force from the motor 21 is outputted from the auxiliary-driving-force output sprocket 51 through the deceleration mechanism 25, and then the auxiliary driving force is combined on the chain 15 serving as an endless driving force transmission member and is transmitted to the rear wheel 4. As in the embodiment, as shown in FIGS. 12 and 13, the rotating body 11 is attached to the intermediate cylinder 23 or the human power transmission member 28, the rotation detector 10 including an optical sensor detects a rotation of the intermediate cylinder 23 or the human power transmission member 28 and rotations of the crank shaft 7a and the pedals 8. The same effect as in the foregoing embodiment can be obtained in the present embodiment.

### Industrial Applicability

The present invention is applicable to a variety of electric assist bicycles capable of traveling with a combination of a human driving force generated by a pedal force from a pedal and an auxiliary driving force generated by a motor.

## Claims

1. An electric assist bicycle capable of traveling with a combination of a human driving force generated by a pedal force from a pedal (8) and an auxiliary driving force generated by a motor (21) provided in a motor drive unit (20) disposed at an intermediate position between a front wheel (3) and a rear wheel (4),
the electric assist bicycle (1) being configured such that a cylindrical human power transmission member (28) for receiving a transmitted human driving force is disposed on an outer periphery of a crank shaft (7a) for receiving the human driving force from the pedal (8),
an interlocking member (29) is disposed on the outer periphery of the crank shaft (7a) so as to receive, from one end of the interlocking member (29), the human driving force transmitted from the human power transmission member (28) and includes a driving force output wheel (13) attached to another end of the interlocking member (29) so as to be coaxial with the crank shaft (7a), the interlocking member (29) combining, in the motor driving unit (20), the human driving force and an auxiliary driving force transmitted in the motor drive unit (20) from the motor (21), and
a driving force from the interlocking member (29) is transmitted to the rear wheel (4) through the driving force output wheel (13) and an endless driving force transmission member (15) looped over the driving force output wheel (13),
the electric assist bicycle (1) comprising:
a deceleration mechanism (25) on an auxiliary-driving-force transmission path from the motor (21) to the interlocking member (29), the deceleration mechanism (25) including a reduction gear (36) and a reduction gear support shaft (36a, 36b) that supports the reduction gear (36),
a one-way clutch (37) for interrupting a human driving force, the one-way clutch (37) being disposed between the reduction gear (36) and the reduction gear support shaft (36a, 36b) so as to prevent a human driving force transmitted in the motor drive unit (20) from the interlocking member (29) from being transmitted to the motor (21),
the human power transmission member (28) being engaged with an intermediate cylinder (23) on the outer periphery of the crank shaft (7a) with a one-way clutch (30) for interrupting an auxiliary driving force between the intermediate cylinder (23) and the interlocking member (29),
**characterized in that**
the human power transmission member (28) has a magneto-striction generation portion (31b) for a torque sensor (31) for detecting the human driving force, and the electric assist bicycle (1) further comprises
a rotation detector (10) that detects a rotation of one of the intermediate cylinder (23) and the human power transmission member (28), the rotation detector (10) being an optical sensor (10).

2. The electric assist bicycle according to claim 1, further comprising a rotating body (11) attached to a position corresponding to the rotation detector (10) on an outer periphery of one of the intermediate cylinder (23) and the human power transmission member (28), the rotating body (11) blocking or reflecting light of the optical sensor (10).

3. The electric assist bicycle according to one of claims 1 and 2, wherein the rotation detector (10) is configured so as to detect a stopped or reversed rotation of the pedal (8).

4. The electric assist bicycle according to any one of claims 1 to 3, wherein the motor (21), the deceleration mechanism (25), and a control unit (24) are assembled into the motor drive unit (20), and
the motor (21) and the control unit (24) overlap each other in side view and are opposed to each other in a width direction of the motor drive unit (20).

## Patentansprüche

1. Fahrrad (1) mit elektrisch unterstütztem Antrieb, das in der Lage ist, mit einer Kombination aus menschlicher Antriebskraft, die mittels einer Kraft eines Pedals, die von einem Pedal (8) erzeugt wird, und einer Hilfs-Antriebskraft zu fahren, die von einem Motor (21) erzeugt wird, der sich in einer Motorantriebs-Einheit (20) befindet, die an einer Position zwischen einem Vorderrad (3) und einem Hinterrad (4) angeordnet ist,
wobei das Fahrrad (1) mit elektrisch unterstütztem Antrieb so ausgeführt ist, dass ein zylindrisches Element (28) zur Übertragung menschlicher Kraft zum Empfangen einer übertragenen menschlichen Antriebskraft an einem Außenumfang einer Kurbelwelle (7a) angeordnet ist, die die menschliche Antriebskraft von dem Pedal (8) empfängt,
ein koppelndes Element (29) an dem Außenumfang der Kurbelwelle (7a) so angeordnet ist, dass es von einem Ende des koppelnden Elementes (29) die von dem Element (28) zur Übertragung menschlicher Kraft übertragene menschliche Antriebskraft empfängt, und das ein Antriebskraft-Ausgaberad (13) enthält, das an einem anderen Ende des koppelnden Elementes (29) so angebracht ist, dass es koaxial zu der Kurbelwelle (7a) ist, wobei das koppelnde Element (29) in der Motorantriebs-Einheit (20) die menschliche Antriebskraft und eine in der Motorantriebs-Einheit (20) von dem Motor (21) übertragene Hilfs-Antriebskraft kombiniert, und
eine Antriebskraft von dem koppelnden Element (29) über das Antriebskraft-Ausgaberad (13) und ein endloses Antriebskraft-Übertragungselement (15), das um das Antriebskraft-Ausgaberad (13) herum geführt wird, auf das Hinterrad (4) übertragen wird,
wobei das Fahrrad (1) mit elektrisch unterstütztem Antrieb umfasst:
einen Verlangsamungs-Mechanismus (25) auf einem Weg zur Übertragung von Hilfs-Antriebskraft von dem Motor (21) zu dem koppelnden Element (29), wobei der Verlangsamungs-Mechanismus (25) ein Untersetzungsrad (36) und eine Untersetzungsrad-Tragewelle (36a, 36b) aufweist, die das Untersetzungsrad trägt, sowie
eine Freilaufkupplung (37) zum Unterbrechen einer menschlichen Antriebskraft, wobei die Freilaufkupplung (37) zwischen dem Klickpause (36) und der Untersetzungsrad-Tragewelle (36a, 36b) angeordnet ist und verhindert, dass eine in der Motorantriebs-Einheit (20) von dem koppelnden Element (29) übertragene menschliche Antriebskraft zu dem Motor (21) übertragen wird,
wobei das Element (28) zur Übertragung menschlicher Kraft mit einem Zwischenzylinder (23) an dem Außenumfang der Kurbelwelle (7a) mit einer Freilaufkupplung (30) zum Unterbrechen einer Hilfs-Antriebskraft zwischen dem Zwischenzylinder (23) und den koppelnden Element (29) in Eingriff ist,
**dadurch gekennzeichnet, dass**
das Element (28) zur Übertragung menschlicher Kraft einen Abschnitt (31b) zur Erzeugung von Magnetostriktion für einen Drehmoment-Sensor (31) hat, mit dem die menschliche Antriebskraft erfasst wird, und das Fahrrad mit elektrisch unterstütztem Antrieb des Weiteren umfasst:
einen Drehungs-Detektor (10), der eine Drehung des Zwischenzylinders (23) oder des Elementes (28) zur Übertragung von menschlicher Kraft erfasst, wobei der Drehungs-Detektor ein optischer Sensor (10) ist.

2. Fahrrad mit elektrisch unterstütztem Antrieb nach Anspruch 1, das des Weiteren einen Drehkörper (11) umfasst, der an einer Position, die dem Drehungs-Detektor (10) entspricht, an einem Außenumfang des Zwischenzylinders (23) oder des Elementes (28) zur Übertragung menschlicher Kraft angebracht ist, wobei der Drehkörper (11) Licht des optischen Sensors (10) sperrt oder reflektiert.

3. Fahrrad mit elektrisch unterstütztem Antrieb nach einem der Ansprüche 1 und 2, wobei der Drehungs-Detektor (10) so ausgeführt ist, dass er eine angehaltene oder umgekehrte Drehung des Pedals (8) erfasst.

4. Fahrrad mit elektrisch unterstütztem Antrieb nach einem der Ansprüche 1 bis 3, wobei der Motor (21), der Verlangsamungs-Mechanismus (25) sowie eine Steuerungs-Einheit (24) in der Motorantriebs-Einheit (20) installiert sind, und
der Motor (21) und die Steuerungs-Einheit (24) einander in Seitenansicht überlappen und einander in einer Breitenrichtung der Motorantriebs-Einheit (20) gegenüberliegen.

## Revendications

1. Vélo à assistance électrique capable de se déplacer avec une combinaison d'une force d'entraînement humaine générée par une force de pédale provenant d'une pédale (8) et une force d'entraînement auxiliaire générée par un moteur (21) pourvu dans une unité d'entraînement moteur (20) disposée à une position intermédiaire entre une roue avant (3) et une roue arrière (4),
le vélo à assistance électrique (1) étant configuré de telle sorte que
un élément de transmission de force humaine cylindrique (28) destiné à recevoir une force d'entraînement humaine transmise est disposé sur une périphérie externe d'un axe de manivelle (7a) destiné à recevoir la force d'entraînement humaine provenant de la pédale (8),
un élément d'interverrouillage (29) est disposé sur la périphérie externe de l'axe de manivelle (7a) de manière à recevoir, d'une extrémité de l'élément d'interverrouillage (29), la force d'entraînement humaine transmise depuis l'élément de transmission de force humaine (28) et comprend une roue de sortie de force d'entraînement (13) attachée à une autre extrémité de l'élément d'interverrouillage (29) de manière à être coaxiale avec l'axe de manivelle (7a), l'élément d'interverrouillage (29) combinant, dans l'unité d'entraînement à moteur (20), la force d'entraînement humaine et une force d'entraînement auxiliaire transmise dans l'unité d'entraînement moteur (20) provenant du moteur (21), et
une force d'entraînement provenant de l'élément d'interverrouillage (29) est transmise à la roue arrière (4) via la roue de sortie de force d'entraînement (13) et un élément de transmission de force d'entraînement sans fin (15) passé en boucle sur la roue de sortie de force d'entraînement (13),
le vélo à assistance électrique (1) comprenant :
un mécanisme de décélération (25) sur un chemin de transmission de force d'entraînement auxiliaire du moteur (21) à l'élément d'interverrouillage (29), le mécanisme de décélération (25) incluant un engrenage de réduction (36) et un axe de support d'engrenage de réduction (36a, 36b) qui supporte l'engrenage de réduction (36),
un engrenage anti-retour (37) pour interrompre une force d'entraînement humaine, l'engrenage anti-retour (37) étant disposé entre l'engrenage de réduction (36) et l'axe de support d'engrenage de réduction (36a, 36b) de manière à éviter qu'une force d'entraînement humaine transmise dans l'unité d'entraînement moteur (20) provenant de l'élément d'interverrouillage (29) soit transmise au moteur (21),
l'élément de transmission de force humaine (28) étant engagé avec un cylindre intermédiaire (23) sur la périphérie externe de l'axe de manivelle (7a) avec un engrenage anti-retour (30) pour interrompre une force d'entraînement auxiliaire entre le cylindre intermédiaire (23) et l'élément d'interverrouillage (29),
**caractérisé en ce que**
l'élément de transmission de force humaine (28) comporte une portion de génération de magnétostriction (31b) pour un capteur de couple (31) afin de détecter la force d'entraînement humaine, et le vélo à assistance électrique (1) comprend en outre
un détecteur de rotation (10) détecte une rotation d'un élément parmi le cylindre intermédiaire (23) et l'élément de transmission de force humaine (28), le détecteur de rotation (10) étant un capteur optique (10).

2. Vélo à assistance électrique selon la revendication 1, comprenant en outre un corps rotatif (11) attaché à une position correspondant au détecteur de rotation (10) sur une périphérie externe d'un élément parmi le cylindre intermédiaire (23) et l'élément de transmission de force humaine (28), le corps rotatif (11) bloquant ou réfléchissant la lumière du capteur optique (10).

3. Vélo à assistance électrique selon l'une des revendications 1 et 2, dans lequel le détecteur de rotation (10) est configuré de manière à détecter une rotation arrêtée ou inversée de la pédale (8).

4. Vélo à assistance électrique selon l'une quelconque des revendications 1 à 3, dans lequel
le moteur (21), le mécanisme de décélération (25) et une unité de contrôle (24) sont assemblés dans l'unité d'entraînement moteur (20), et
le moteur (21) et l'unité de contrôle (24) se chevauchent en vue latérale et sont opposés entre eux en direction de la largeur de l'unité d'entraînement moteur (20).
